(19) Europäisches Patentamt
European Patent Office
Office européen des brevets

(11) EP 4 748 713 A1

(12) EUROPEAN PATENT APPLICATION

(43) Date of publication:
27.05.2026 Bulletin 2026/22

(21) Application number: 24383273.0

(22) Date of filing: 25.11.2024

(51) International Patent Classification (IPC):
B64D 13/02 (2006.01)   F02C 6/08 (2006.01)
F02C 9/18 (2006.01)

(52) Cooperative Patent Classification (CPC):
B64D 13/02; F02C 9/18

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: AIRBUS OPERATIONS, S.L.U.
28906 Getafe (Madrid) (ES)

(72) Inventors:
• SAEZ MOLLEJO, Alejandro
  28906 Getafe (Madrid) (ES)
• CARRION BENEDITO, Juan Luis
  28906 Getafe (Madrid) (ES)
• GARCIA ZUAZO, Angel
  28906 Getafe (Madrid) (ES)

(74) Representative: Herrero & Asociados, S.L.
Edificio Aqua - Calle Agustín de Foxá, 4-10, 2ºA
28036 Madrid (ES)

(54) **AIRCRAFT BLEED AIR SYSTEM AND METHOD FOR ITS MONITORING**

(57) The aircraft bleed air system comprises an engine (13) comprising a first pressure port (3) and a second pressure port (4); a pressure valve (11) placed downstream of the second pressure port (4); and a pressure regulating valve (2) placed downstream of the first pressure port (3) and the pressure valve (11).

The method comprises detecting a bleed pressure evolution in a transient from a moment when a pressure regulating valve (2) is fully open and a moment in which a pressure valve (11) is opened; determining that the pressure regulating valve (2) functions correctly if the detected pressure transient is higher than a preset value; or determining that the pressure regulating valve (2) is damaged if the detected pressure transient is lower than a preset value, identifying an event.

They permit a predictive maintenance of the valves of the bleed air system.

FIG. 1

## Description

The present invention relates to an aircraft bleed air system and method for its monitoring, in particular, for determining a predictive maintenance for aircrafts, and aimed for the identification of pressure regulation issues in aircraft valves, such as aircraft electro-pneumatic valves.

## Background of the invention

In aircrafts, it is necessary to monitor their components, one of them being the valves, such as electro-pneumatic valves for identifying pressure regulation issues.

An aircraft comprises a bleed monitoring computer, BMC, which is an essential component that monitors and controls the aircraft's bleed air system, which provides the necessary supply of compressed air for various aircraft systems, such as engine starting, cabin pressurization, and air conditioning.

The BMC continuously monitors the status and functionality of the bleed air system, ensuring that it operates within safe limits and protecting against potential failures.

Current system monitoring performed by the BMC is focused on safe system operation. Troubleshooting related to these alerts requires time, qualified personal and sometimes special means. This can lead to operational interruptions impacting operators' cost and image.

A predictive maintenance solution permits to anticipate such failures, improving the operational reliability of the aircraft and allowing a better planification of the aircraft maintenance, as well as the allocation of spares.

One solution for pneumatic valves predictive maintenance is based on opening/closing time monitoring. However, this solution is not suitable for many modern bleed air systems that do not include mechanical switches for position measurement.

## Description of the invention

Therefore, an objective of the present invention is to provide an aircraft bleed air system and a method for its monitoring that permits a predictive maintenance of the valves of the bleed air system, in particular, electro-pneumatic valves of an aircraft, so that the bleed air system of an aircraft can be monitored.

The system and method of the invention solve the above-mentioned disadvantages and has other advantages which will be described below.

The system and method according to the present invention are described in the independent claims, and the dependent claims include additional features that are optional.

In particular, the aircraft bleed air system comprises:

- an engine comprising a first or intermediate pressure port and a second or high pressure port;
- a pressure valve placed downstream of the second pressure port; and
- a pressure regulating valve placed downstream of the first pressure port and the pressure valve.

Furthermore, the pressure regulating valve is preferably connected to a pressure regulator that regulates a pressure difference between an opening chamber and a closing chamber, said opening and closing chambers being placed between the pressure regulating valve and the pressure regulator.

According to a preferred embodiment, the pressure regulator valve is connected to the closing chamber by a sense line.

Preferably, the regulator is fed by a motor that is connected to a controller.

Furthermore, a pressure check valve is preferably placed between the intermediate pressure port and the pressure regulating valve.

The aircraft bleed air system according to the present invention can also comprise a bleed manifold pressure sensor placed upstream of the pressure regulating valve and a bleed pressure sensor placed downstream of the pressure regulating valve.

The method for monitoring the aircraft bleed air system comprises the following steps:

- detecting a bleed pressure evolution in a transient from a moment when a pressure regulating valve is fully open and a moment in which a pressure valve is opened;
- determining that the pressure regulating valve functions correctly if the detected pressure transient is higher than a preset value; or
- determining that the pressure regulating valve is damaged if the detected pressure transient is lower than a preset value, identifying an event.

Preferably, an alert is emitted if a plurality of events is identified in a predetermined time lapse.

For identifying an event the following aircraft parameters can also be monitored during a flight in both sides of the aircraft:

- Altitude (ALT);
- Flight Phase (FP);
- Pressure Regulating Valve closure command (LH_PRV_CMD and RH_PRV_CMD);
- Pressure Valve closure command (LH_HPV_CMD and RH_HPV_CMD)
- Pressure upstream the pressure valve by a Bleed Manifold Pressure Sensor (LH_BMPS and RH_BMPS); and
- Pressure downstream the pressure valve by a Bleed Pressure Sensor (LH_BMPS and RH_BMPS).

Furthermore, according to a preferred embodiment:

- for each flight, each side XX, wherein XX can be right, RH, or left, LH, sides, identify time windows matching the following conditions:

$$(FP = 6) \text{ AND } (ALT > ALT\_min\_threshold);$$

$$LH\_PRV\_CMD = 0 \text{ (open) and } RH\_PRV\_CMD = 0 \text{ (open)}$$

with N seconds;

$$XX\_BMPS > BMPS\_min\_threshold,$$

$$XX\_HPV\_CMD = 0 \text{ (open) and } XX\_HPV\_CMD = 1 \text{ (closed) } N\_seconds \text{ ago};$$

and

$$XX\_BMPS < BMPS\_max\_threshold \ N\_seconds \text{ ago};$$

- for each side of the aircraft for each time window, calculate:

$$Duration = T\_end - T\_start$$

$$Mean\_Press\_Error = Mean(XX\_BPS - BPS\_ref)$$

- for each side of the aircraft for each flight:

  - Discard the feature if Duration < 3 s, the remaining number of features after this filter being N_Features.

$$Max\_Press\_Error = Max(Mean\_Press\_Error)$$

$$Min\_Press\_Error = Min(Mean\_Press\_Error)$$

- applying the following equations:

$$Max\_Press\_Error\_percentage = (Max\_Press\_Error - A) / B$$

$$Min\_Press\_Error\_percentage = (Min\_Press\_Error - A) / B$$

$$Press\_Error\_percentage = (Max\_Press\_Error\_percentage + Min\_Press\_Error\_percentage) / 2$$

- for each side, an event is identified if:

$$Press\_Error\_percentage < Min\_pressure\_error\_threshold;$$

or

$$Press\_Error\_percentage > Max\_pressure\_error\_threshold.$$

The system and method according to the present invention are able to identify mechanical problems that can lead to a situation in which the valve is not able to open enough, i.e., a low pressure scenario, or to close enough, i.e., an overpressure scenario. This is achieved by monitoring the behavior during pressure transients.

While solutions based on opening/closing time monitoring are aimed at anticipating a lack of closure capability, the method and system according to the present invention is aimed at the detection of a degradation of the regulation function.

For electro-pneumatic valves, where a control loop using regulated pressure feedback exists, it can be difficult to notice such problems in advance if the feedback signal is not monitored. The present invention focuses on a transient interval where the valve exhibits its purely pneumatic open loop behavior during a transition from fully open to a regulating position.

**Brief description of the drawings**

For a better understanding of what has been explained above, some drawings are included in which, schematically and only by way of a non-limiting example, a practical case of embodiment is represented.

Figure 1 is a schematic view of the aircraft bleed air system according to the present invention;

Figure 2 is a schematic view of the pressure regulating valve of the system according to the present invention;

Figure 3 is a graphic showing the bleed pressure evolution in the transient from a pressure regulating valve fully open to regulation after pressure valve opening for a healthy pressure regulating valve;

Figure 4 is a graphic showing the bleed pressure evolution in the transient from a pressure regulating valve fully open to regulation after pressure valve opening for a damaged pressure regulating valve; and

Figure 5 is a graphic showing the pressure degradation and the number of pressure events along time according to one example of the method according to the present invention.

**Description of a preferred embodiment**

Firstly, in the present description, the following acronyms are used:

- BMC: Bleed Monitoring Computer
- BPS: Bleed Pressure Sensor
- BMPS: Bleed Manifold Pressure Sensor
- EBAS: Engine Bleed Air System
- PACK: Pressurization Air Conditioning Kit
- PID: Proportional Integral Derivative
- PRV: Pressure Regulating Valve
- HPV: High Pressure Valve
- S/L: Sense line
- WAI: Wing Anti-Ice
- IP: Intermediate Pressure
- HP: High Pressure

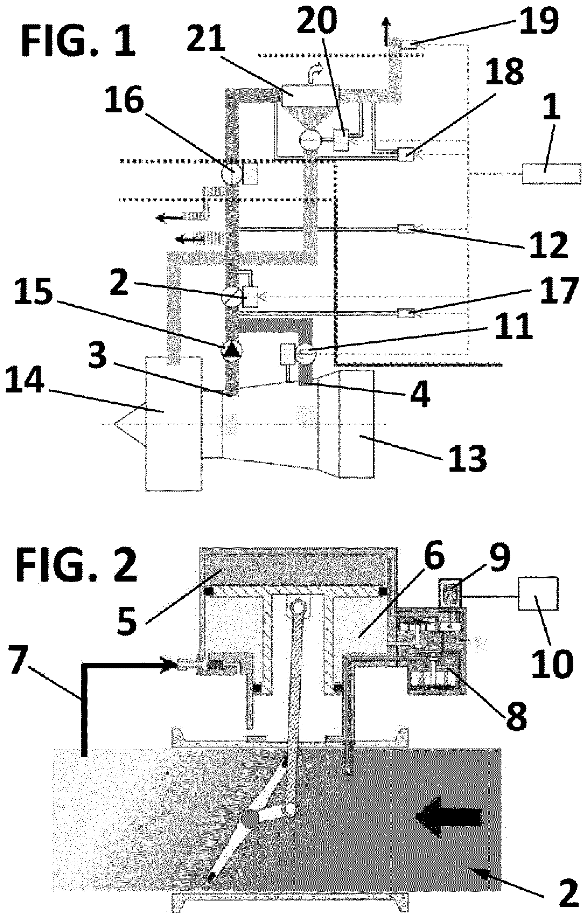

Figure 1 schematically shows an example of the aircraft bleed air system, EBAS, according to the present invention, that is used to supply air from engines of an aircraft to consumers, mainly, PACKS and WAI.

One aircraft has two EBAS, one per engine. Each EBAS is designed to select the air source compressor stage at each moment, IP or HP regulate bleed air temperature and regulate bleed air pressure. Each EBAS is monitored and controlled by one BMC (1).

In Figure 1 an engine (13) with a fan (14) is shown, to which a PRV (2) of the EBAS is connected.

The PRV (2) is in charge of isolation, i.e., EBAS OFF, and regulation of pressure delivered to the consumers. The upstream pressure can come from an IP port (3), first port, or an HP port (4), second port. The regulation set point can be e.g. 42 psig if the two EBAS are active and e.g. 50 psig for only one EBAS. If the pressure upstream is smaller than a regulation set point, a pressure valve, HPV, (11) will open completely to minimize the pressure drop.

The position is controlled by the pressure difference between an opening chamber (5) and a closing chamber (6), shown in Figure 2. The closing chamber (6) is connected to the PRV (2) downstream pressure with a sense line (7). The opening chamber (5) is fed from a regulator (8) in conjunction with a torque motor (9).

The torque motor (9) current is set using a PID controller (10) with feedback from a BPS (12). Thus, the regulation is preferably electro-pneumatic. The controller (10) takes into account transitions between EBAS OFF/ON and HPV (11) closed/open in order to deal with transients.

The method and system according to the present invention monitors the transient in the BPS regulation when the PRV (2) transitions from fully open bleeding from IP to regulation just after the HPV (11) opening.

The EBAS shown in Figure 1 also comprises:

- an intermediate pressure check valve (15) placed between the IP port (3) and the PRV (2),
- an overpressure valve (16) placed downstream of the PRV (2),
- a BMPS (17) for measuring the pressure upstream of the HPV (11),
- a differential pressure sensor (18),
- a bleed temperature sensor (19),
- a fan air valve (20), and
- a precooler (21).

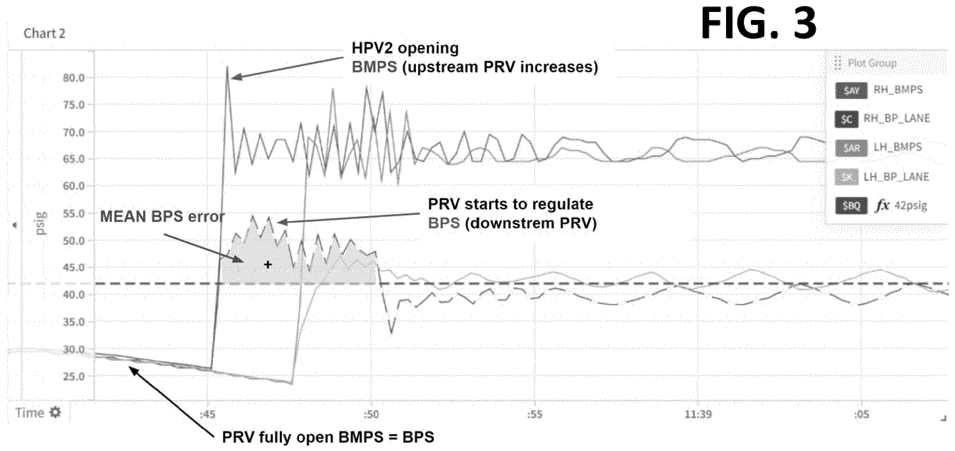

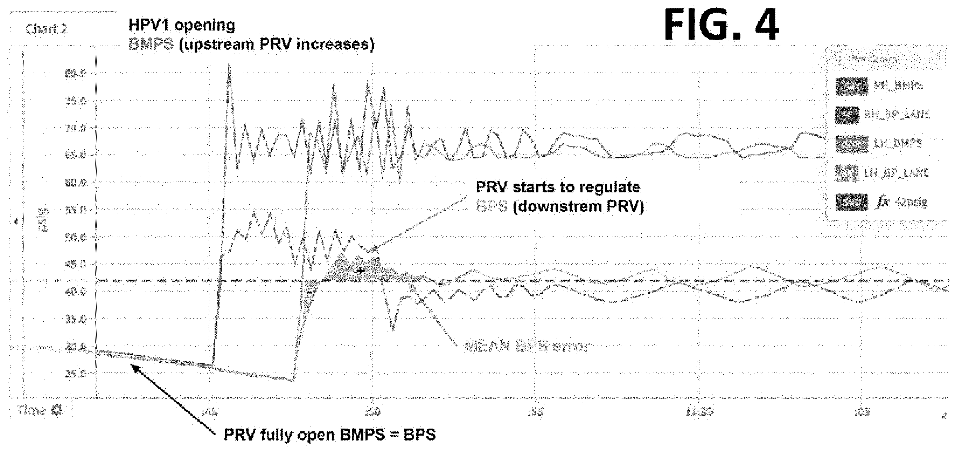

Figures 3 and 4 show the bleed pressure (BP_LANE / BPS) behavior during the HPV (11) opening for a healthy PRV (2), shown with a discontinuous line, and a PRV (2) close to failure, shown with a continuous line.

In particular, Figure 3 shows the bleed pressure evolution in the transient from PRV (2) fully open to regulation after HPV (11) opening for healthy PRV (2), and Figure 4 shows the bleed pressure evolution in the transient from PRV (2) fully open to regulation after HPV (11) opening for a damaged PRV (2).

At the moment of the HPV (11) opening, the BMPS (17) increases from the IP port (3) pressure to the HPV (11) pressure regulation value, e.g., 65 psig. The PRV (2) was fully open before it started regulating. Although the setpoint in the case of two bleed operatives is e.g. 42 psig, there will be an initial transient, when the pressure will be higher in healthy PRVs (2).

However, it is observed that the pressure during this transient will be lower for PRVs (2) that will exhibit a low pressure failure or damaged BPS (12) sense lines. The area will be greater than the healthy scenario for cases when the PRV (2) fails in an overpressure scenario.

In order to identify an event the following aircraft parameters can be monitored during the flight:

- Altitude [ALT]
- Flight Phase [FP]
- Pressure Regulating Valve (PRV) closure command (valve to be monitored) [LH_PRV_CMD and RH_PRV_CMD]
- High Pressure Valve (HPV) closure command (located upstream the PRV) [LH_HPV_CMD and RH_HPV_CMD]
- Pressure upstream the valve: Bleed Manifold Pressure Sensor (BMPS) [LH_BMPS and RH_BMPS]
- Pressure downstream the valve: Bleed Pressure Sensor (BPS) [LH_BMPS and RH_BMPS]

The predictive model makes can use, as an example, of the following constant parameters that are adjusted to maximize its performance:

| Name | Description | Value |
|------|-------------|-------|
| N seconds | Monitoring window during HPV opening (s) | 5 |
| ALT min threshold | Minimum altitude for the monitoring windows (ft) | 15000 |
| BMPS max threshold | Maximum BMPS before an opening (s) | 40 |
| BMPS min threshold | Minimum BMPS for a monitoring window (psig) | 50 |
| BPS ref | Reference value to calculate BPS error (psig) | 42 |
| A | First coefficient for non-dimensionalization (psig) | 6.6 |
| B | Second coefficient for non-dimensionalization (psig) | 0.059 |

(continued)

| Name | Description | Value |
|------|-------------|-------|
| Max pressure error threshold | Maximum pressure error (%) | 100 |
| Mim pressure error threshold | Minimum pressure error (%) | -100 |
| Cumulative event threshold | Number of events for an alert | 7 |
| Flight window | Flight window | 10 |

For each flight, each side XX, wherein XX can be right, RH, or left, LH, identify the time windows matching the following conditions:

-

$$(FP = 6) \text{ AND } (ALT > ALT\_min\_thr)$$

AND

-

$$LH\_PRV\_CMD = 0 \text{ (open) AND } RH\_PRV\_CMD = 0 \text{ (open)}$$

with N_seconds conf time AND

-

$$XX\_BMPS > BMPS\_min\_thr \text{ AND}$$

-

$$XX\_HPV\_CMD = 0 \text{ (open) AND } XX\_HPV\_CMD = 1 \text{ (closed) N\_seconds ago}$$

AND

-

$$XX\_BMPS < BMPS\_max\_thr \text{ N\_seconds ago}$$

Rationale:

- Focus on switchings during cruise phase.
- Ensure two bleed operative, regulation setpoint is different otherwise.
- Ensure that PRV is regulating (upstream pressure greater than regulation setpoint).
- HPV has just opened.
- PRV was fully open before the HPV opening.

For each side, each time window, calculate:

-

$$Duration = T\_end - T\_start$$

-

$$Mean\_Press\_Error = Mean(XX\_BPS - BPS\_ref)$$

For each side, each flight:

- Discard the feature if Duration < 3 s. The remaining number of features after this filter is N_Features.

-

$$Max\_Press\_Error = Max(Mean\_Press\_Error)$$

-

$$Min\_Press\_Error = Min(Mean\_Press\_Error)$$

In order to make the metric non-dimensional, the following equations are applied:

-

$$Max\_Press\_Error\_percentage = (Max\_Press\_Error - A) / B$$

-

$$Min\_Press\_Error\_percentage = (Min\_Press\_Error - A) / B$$

-

$$Press\_Error\_percentage = (Max\_Press\_Error\_percentage + Min\_Press\_Error\_percentage) / 2$$

A and B are coefficients that convert the pressure error into a non-dimensional value (i.e. from engineering units in psig to a percentage). Its numerical values, as well as the values of: Max pressure error threshold, Mim pressure error threshold, Cumulative event threshold and Flight window have been calculated to maximize the detection rate (number of detections divided by number of real events) and confidence rate (number of useful alerts divided by the number of triggered alerts) based on a series of real events of in-service aircraft.

For each side, an event is identified if:

-

$$Press\_Error\_percentage < Min\_pressure\_error\_threshold$$

OR

-

$$Press\_Error\_percentage > Max\_pressure\_error\_threshold$$

For each side, if the number of events in the last Window flights, XX_N_EVENTS, is bigger than Cumulative flights an alert shall be generated.

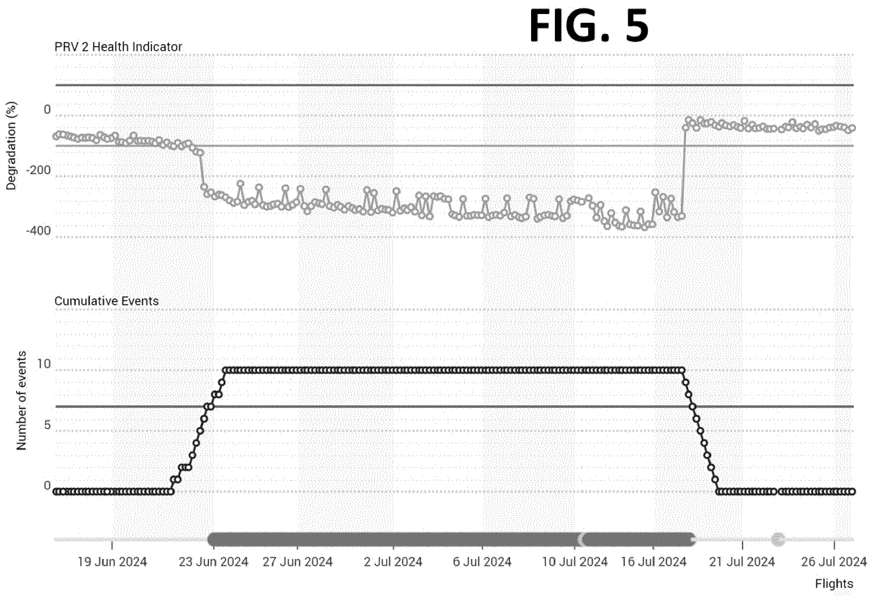

Figure 5 shows an example of the feature Press_Error_percentage, named Degradation (%), and the number of events detected for a failure case, showing the recovery after the equipment removal.

**Claims**

1. Aircraft bleed air system, comprising:

   - an engine (13) comprising a first pressure port (3) and a second pressure port (4);
   - a pressure valve (11) placed downstream of the second pressure port (4); and

- a pressure regulating valve (2) placed downstream of the first pressure port (3) and the pressure valve (11).

2. Aircraft bleed air system according to claim 1, wherein the pressure regulating valve (2) is connected to a pressure regulator (8) that regulates a pressure difference between an opening chamber (5) and a closing chamber (6), said opening and closing chambers (5, 6) being placed between the pressure regulating valve (2) and the pressure regulator (8).

3. Aircraft bleed air system according to claim 2, wherein the pressure regulator valve (2) is connected to the closing chamber (6) by a sense line (7).

4. Aircraft bleed air system according to claim 2, wherein the regulator (8) is fed by a motor (9) that is connected to a controller (10).

5. Aircraft bleed air system according to any one of the previous claims, wherein a pressure check valve (15) is placed between the first pressure port (3) and the pressure regulating valve (2).

6. Aircraft bleed air system according to any one of the previous claims, wherein the system also comprises a bleed manifold pressure sensor (17) placed upstream of the pressure regulating valve (2).

7. Aircraft bleed air system according to any one of the previous claims, wherein the system also comprises a bleed pressure sensor (12) placed downstream of the pressure regulating valve (2).

8. Method for monitoring the aircraft bleed air system according to any one of the previous claims, comprising the following steps:

   - detecting a bleed pressure evolution in a transient from a moment when a pressure regulating valve (2) is fully open and a moment in which a pressure valve (11) is opened;
   - determining that the pressure regulating valve (2) functions correctly if the detected pressure transient is higher than a preset value; or
   - determining that the pressure regulating valve (2) is damaged if the detected pressure transient is lower than a preset value, identifying an event.

9. Method according to claim 8, wherein an alert is emitted if a plurality of events is identified in a predetermined time lapse.

10. Method according to claim 8, wherein for identifying an event the following aircraft parameters are also monitored during a flight in both sides (LH, RH) of the aircraft:

   - Altitude (ALT);
   - Flight Phase (FP);
   - Pressure Regulating Valve (2) closure command (LH_PRV_CMD and RH_PRV_CMD);
   - Pressure Valve (11) closure command (LH_HPV_CMD and RH_HPV_CMD)
   - Pressure upstream the pressure valve (11) by a Bleed Manifold Pressure Sensor (17) (LH_BMPS and RH_BMPS); and
   - Pressure downstream the pressure valve (11) by Bleed Pressure Sensor (12) (LH_BMPS and RH_BMPS).

11. Method according to claim 10, wherein:

   - for each flight, each side XX, wherein XX can be right, RH, or left, LH, sides, identify time windows matching the following conditions:

   -

$$(FP = 6) \text{ AND } (ALT > ALT\_min\_threshold);$$

   -

LH_PRV_CMD = 0 (open) and RH_PRV_CMD = 0 (open) with N_seconds;

-

XX_BMPS > BMPS_min_threshold,

-

XX_HPV_CMD = 0 (open) and XX_HPV_CMD = 1 (closed) N_seconds ago;

and

-

XX_BMPS < BMPS_max_threshold N_seconds ago;

- for each side of the aircraft for each time window, calculate:

-

$$Duration = T\_end - T\_start$$

-

$$Mean\_Press\_Error = Mean(XX\_BPS - BPS\_ref)$$

- for each side of the aircraft for each flight:

- Discard the feature if Duration < 3 s, the remaining number of features after this filter being N_Features.

-

$$Max\_Press\_Error = Max(Mean\_Press\_Error)$$

-

$$Min\_Press\_Error = Min(Mean\_Press\_Error)$$

- applying the following equations:

-

$$Max\_Press\_Error\_percentage = (Max\_Press\_Error - A) / B$$

-

$$Min\_Press\_Error\_percentage = (Min\_Press\_Error - A) / B$$

-

$$Press\_Error\_percentage = (Max\_Press\_Error\_percentage + Min\_Press\_Error\_percentage) / 2$$

- for each side, an event is identified if:

-

Press_Error_percentage < Min_pressure_error_threshold;

or

-

Press_Error_percentage > Max_pressure_error_threshold.

FIG. 1

FIG. 2

# FIG. 3

FIG. 4

# FIG. 5

Europäisches
Patentamt

European
Patent Office

Office européen
des brevets

## EUROPEAN SEARCH REPORT

**Application Number**

EP 24 38 3273

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 001 116 A1 (AIRBUS OPERATIONS SLU [ES]) 25 May 2022 (2022-05-25) | 1-7 | INV. |
| Y | * paragraph [0073] - paragraph [0093]; | 8,9 | B64D13/02 |
| A | figures 2-4 * | 10,11 | F02C6/08 |
| | ----- | | F02C9/18 |
| X | FR 3 105 300 A1 (SAFRAN AIRCRAFT ENGINES [FR]) 25 June 2021 (2021-06-25) | 1-7 | |
| Y | * paragraph [0032] - paragraph [0055]; | 8,9 | |
| A | figures 1, 2 * | 10,11 | |
| | ----- | | |
| X | US 2019/291876 A1 (KAMENETZ JEFFRY K [US] ET AL) 26 September 2019 (2019-09-26) | 1-7 | |
| Y | * paragraph [0014] - paragraph [0027]; | 8,9 | |
| A | figures 1-3 * | 10,11 | |
| | ----- | | |
| A | US 4 671 318 A (BENSON PAUL A [US]) 9 June 1987 (1987-06-09) * column 4 - column 7; figure 2 * | 1-11 | |
| | ----- | | |
| A | US 6 058 725 A (MONFRAIX JEAN HENRI [FR] ET AL) 9 May 2000 (2000-05-09) * column 4 - column 6; figures 2-4 * | 1-11 | TECHNICAL FIELDS SEARCHED (IPC) |
| | ----- | | B64D |
| Y | US 2008/238698 A1 (HOLT JONATHAN E [GB] ET AL) 2 October 2008 (2008-10-02) | 8,9 | F02K F02C |
| A | * paragraph [0001] - paragraph [0043]; figures 1-4 * | 1-7,10, 11 | |
| | ----- | | |
| A | CN 118 770 557 A (COMMERCIAL AIRCRAFT CORP CN ET AL.) 15 October 2024 (2024-10-15) * the whole document * | 1-11 | |
| | ----- | | |

The present search report has been drawn up for all claims

| Place of search | Date of completion of the search | Examiner |
|---|---|---|
| Munich | 1 April 2025 | Morasch, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 748 713 A1**

## ANNEX TO THE EUROPEAN SEARCH REPORT
## ON EUROPEAN PATENT APPLICATION NO.

EP 24 38 3273

This annex lists the patent family members relating to the patent documents cited in  the above-mentioned European search report.
The members are as contained in the European Patent Office EDP file on
The European Patent Office is in no way liable for these particulars which are merely given for the purpose of information.

01-04-2025

| Patent document cited in search report | | | Publication date | Patent family member(s) | | | Publication date |
|---|---|---|---|---|---|---|---|
| EP | 4001116 | A1 | 25-05-2022 | CN | 114517739 | A | 20-05-2022 |
| | | | | EP | 4001116 | A1 | 25-05-2022 |
| | | | | US | 2022153420 | A1 | 19-05-2022 |
| FR | 3105300 | A1 | 25-06-2021 | NONE | | | |
| US | 2019291876 | A1 | 26-09-2019 | CN | 110294131 | A | 01-10-2019 |
| | | | | EP | 3543136 | A1 | 25-09-2019 |
| | | | | US | 2019291876 | A1 | 26-09-2019 |
| US | 4671318 | A | 09-06-1987 | EP | 0190943 | A2 | 13-08-1986 |
| | | | | JP | H0228692 | B2 | 26-06-1990 |
| | | | | JP | S61229929 | A | 14-10-1986 |
| | | | | US | 4671318 | A | 09-06-1987 |
| US | 6058725 | A | 09-05-2000 | CA | 2261364 | A1 | 05-08-1999 |
| | | | | DE | 69909149 | T2 | 08-04-2004 |
| | | | | EP | 0934876 | A1 | 11-08-1999 |
| | | | | FR | 2774357 | A1 | 06-08-1999 |
| | | | | US | 6058725 | A | 09-05-2000 |
| US | 2008238698 | A1 | 02-10-2008 | EP | 1926009 | A2 | 28-05-2008 |
| | | | | US | 2008238698 | A1 | 02-10-2008 |
| CN | 118770557 | A | 15-10-2024 | NONE | | | |

EPO FORM P0459

For more details about this annex : see Official Journal of the European Patent Office, No. 12/82